(19) Europäisches Patentamt / European Patent Office / Office européen des brevets

(11) **EP 2 455 916 B1**

(12) **FASCICULE DE BREVET EUROPEEN**

(45) Date de publication et mention
de la délivrance du brevet:
**23.08.2017 Bulletin 2017/34**

(51) Int Cl.:
***G06T 7/246*** *(2017.01)*

(21) Numéro de dépôt: **11187631.4**

(22) Date de dépôt: **03.11.2011**

(54) **Interface homme-machine basée sur le suivi non-rigide**

Auf nichtstarrem Tracking basierende Mensch-Maschine-Schnittstelle

Non-rigid tracking-based human-machine interface

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.11.2010 FR 1059541**

(43) Date de publication de la demande:
**23.05.2012 Bulletin 2012/21**

(73) Titulaire: **Qualcomm Connected Experiences, Inc.
San Diego, CA 92121 (US)**

(72) Inventeurs:
• **Livet, Nicolas
38120 SAINT EGREVE (FR)**
• **Pasquier, Thomas
33500 LIBOURNE (FR)**

(74) Mandataire: **Wagner & Geyer
Partnerschaft
Patent- und Rechtsanwälte
Gewürzmühlstrasse 5
80538 München (DE)**

(56) Documents cités:
• BYOUNGCHUL KO ET AL: "A new content-based image retrieval system using hand gesture and relevance feedback", 20010822; 20010822 - 20010825, 22 août 2001 (2001-08-22), pages 385-388, XP010661855, DOI: DOI:10.1109/ICME.2001.1237737 ISBN: 978-0-7695-1198-6
• CHEN-CHIUNG HSIEH ET AL: "Robust Visual Mouse by motion history image", SYSTEM SCIENCE AND ENGINEERING (ICSSE), 2010 INTERNATIONAL CONFERENCE ON, IEEE, PISCATAWAY, NJ, USA, 1 juillet 2010 (2010-07-01), pages 161-166, XP031734648, ISBN: 978-1-4244-6472-2
• SINGH M ET AL: "Robust KLT tracking with Gaussian and laplacian of Gaussian weighting functions", PATTERN RECOGNITION, 2004. ICPR 2004. PROCEEDINGS OF THE 17TH INTERNAT IONAL CONFERENCE ON CAMBRIDGE, UK AUG. 23-26, 2004, PISCATAWAY, NJ, USA,IEEE, LOS ALAMITOS, CA, USA, vol. 4, 23 août 2004 (2004-08-23), pages 661-664, XP010724007, DOI: DOI:10.1109/ICPR.2004.1333859 ISBN: 978-0-7695-2128-2

**Description**

La présente invention concerne la détection d'objets par analyse d'images, et leur suivi, dans un flux vidéo représentant une séquence d'images et plus particulièrement un procédé et un dispositif de détection et de suivi d'objets non rigides en mouvement, en temps réel, dans un flux vidéo, permettant à un utilisateur d'interagir avec un système informatique.

La réalité augmentée a notamment pour objet d'insérer un ou plusieurs objets virtuels dans des images d'un flux vidéo représentant une séquence d'images. Selon le type d'application, la position et l'orientation de ces objets virtuels peuvent être déterminées par des données externes à la scène représentée par les images, par exemple des coordonnées issues directement d'un scénario de jeu, ou par des données liées à certains éléments de cette scène, par exemple des coordonnées d'un point particulier de la scène tel que la main d'un joueur. Lorsque la nature des objets présents dans la scène réelle est identifiée et que la position et l'orientation sont déterminées par des données liées à certains éléments de cette scène, il peut être nécessaire de suivre ces éléments en fonction des mouvements de la caméra ou des mouvements de ces éléments eux-mêmes dans la scène. Les opérations de suivi d'éléments et d'incrustation d'objets virtuels dans les images réelles peuvent être exécutées par des calculateurs distincts ou par un même calculateur.

A titre d'illustration, l'article intitulé "Robust KLT tracking with gaussian and laplacian of guassian weighting functions" (Singh M et al., IEEE Proceedings of the 17th international conference on pattern recognition, 2004) décrit des algorithmes de suivi d'objets offrant des performances élevées, notamment en termes de résistance au bruit.

Par ailleurs, il peut être proposé à des utilisateurs, dans de telles applications, d'interagir, dans la scène réelle représentée, au moins partiellement, par le flux d'images, avec un système informatique pour, notamment, déclencher des actions ou des scénarii particuliers qui permettent par exemple l'interaction avec des éléments virtuels superposés aux images.

Il en est de même dans de nombreux autres types d'applications, par exemple dans des applications de jeux vidéo.

A ces fins, il est nécessaire d'identifier des mouvements particuliers tels que des mouvements de mains pour identifier une ou des commandes prédéterminées. De telles commandes sont comparables à celles initiées par un dispositif de pointage informatique tel qu'une souris.

A titre d'illustration, l'article intitulé "A new content-based image retrieval system using hand gesture and relevance feedcack" (ByoungChul Ko et al., IEEE International conference on multimédia and expo, 2001) décrit notamment un algorithme pour suivre les doigts d'un utilisateur dans une séquence d'images, utilisés pour commander une interface homme-machine. Selon cet algorithme, les images sont segmentées et des régions extraites. La région représentant la main de l'utilisateur est alors sélectionnée. A ces fins, il est admis que la région associée au mouvement le plus rapide représente la main. Une recherche est alors effectuée dans cette région pour localiser les doigts de l'utilisateur.

De même, l'article intitulé "Robust visual mouse by motion history image" (Chen-Chiung Hsieh et al., IEEE International conference on system science and engineering, 2010) vise un procédé d'interaction visuelle entre un utilisateur et un système informatique permettant de contrôler ce dernier. Selon le procédé décrit, une séquence d'images est capturée par une caméra vidéo et transmise à un module d'extraction afin de supprimer le fond de l'image par soustraction et ainsi détecter d'éventuels mouvements. Le résultat de cette opération est un masque de mouvements qui est utilisé pour identifier des régions représentant la main d'un utilisateur en analysant les régions dans lesquels des mouvements ont été détectés avec la couleur de la peau.

Le demandeur a développé des algorithmes de suivi visuel d'objets texturés, présentant des géométries variées, n'utilisant pas de marqueur et dont l'originalité réside dans l'appariement de points particuliers entre une image courante d'un flux vidéo et un ensemble d'images clés, obtenues automatiquement à l'initialisation du système. Cependant, de tels algorithmes, décrits dans les demandes de brevet français 0753482, 0752810, 0902764, 0752809 et 0957353, ne permettent pas la détection de mouvement d'objets non texturés ou présentant une texture quasi uniforme tels que les mains d'un utilisateur. De plus, ils visent essentiellement le suivi d'objets rigides.

Alors qu'il existe des solutions permettant à un utilisateur d'interagir, dans une scène représentée par une séquence d'images, avec un système informatique, ces solutions sont généralement complexes à mettre en oeuvre.

En effet, une première solution consiste à utiliser des capteurs sensoriels associés, par exemple, aux articulations d'un utilisateur ou d'un acteur. Bien que cette approche soit souvent dédiée aux applications de capture de mouvement, notamment pour les effets spéciaux cinématographiques, il est aussi possible de suivre la position et l'orientation d'un acteur et, en particulier, de ses mains et de ses pieds pour lui permettre d'interagir, dans une scène virtuelle, avec un système informatique. Cependant, l'utilisation de cette technique s'avère coûteuse car elle nécessite l'insertion, dans la scène représentée par le flux d'images analysées, de capteurs encombrants pouvant en outre subir des perturbations liées à leur environnement (par exemple des perturbations électromagnétiques).

Une autre solution, développée notamment dans les projets européens « OCETRE » et HOLONICS » consiste à utiliser plusieurs sources d'images, par exemple plusieurs caméras, pour permettre une reconstruction tridimensionnelle, en temps réel, de l'environnement et des mouvements spatiaux des utilisateurs. Un exemple de telles approches est notamment décrit dans le document intitulé « Holographic and action capture techniques », T. Rodriguez, A. Cabo de Leon, B. Uzzan, N. Livet, E. Boyer, F. Geffray, T. Balogh, Z. Megyesi et A. Barsi, August 2007, SIGGRAPH '07, ACM SIGGRAPH 2007, Emerging Technologies. Il est à noter que ces applications peuvent permettre une restitution de la géométrie de la scène réelle mais ne permettent pas, aujourd'hui, d'identifier des mouvements précis. En outre, pour satisfaire des contraintes temps réel, il est nécessaire de mettre en place des architectures matérielles complexes et coûteuses.

Il existe également des écrans tactiles utilisés pour visualiser des scènes de réalité augmentée qui permettent de déterminer des interactions d'un utilisateur avec un système informatique. Cependant, ces écrans sont coûteux et peu adaptés aux applications de réalité augmentée.

En ce qui concerne les interactions des utilisateurs dans le domaine des jeux vidéo, une image est typiquement capturée en provenance d'une caméra de type *webcam* reliée à un ordinateur ou à une console. Cette image, après avoir été stockée dans une mémoire du système auquel la caméra est reliée, est généralement analysée par un algorithme de suivi d'objets, aussi appelé *blobs tracking* en terminologie anglo-saxonne, pour calculer, en temps réel, les contours de certains éléments de l'utilisateur qui se déplace dans l'image en utilisant, notamment, un algorithme de flots optiques. La position de ces formes dans l'image permet de modifier ou de déformer certaines parties de l'image affichée. Cette solution permet donc de localiser la perturbation d'une zone de l'image selon deux degrés de liberté.

Cependant, les limites de cette approche sont principalement le manque de précision car il n'est pas possible de maintenir l'exécution correcte du procédé lors d'un déplacement de la caméra et le manque de sémantique car il n'est pas possible de distinguer les mouvements entre l'avant et l'arrière plan. De plus, cette solution utilise l'analyse d'image par flots optiques ce qui ne permet pas, en particulier, d'être robuste au changement d'éclairage ou encore au bruit.

Il existe également une approche de détection, en temps réel, d'une interaction entre un utilisateur et un système informatique, dans une scène de réalité augmentée, à partir d'une image d'une séquence d'images, l'interaction résultant de la modification de l'apparence de la représentation d'un objet présent dans l'image. Cependant, ce procédé, décrit, notamment, dans la demande de brevet français 0854382, ne permet pas d'identifier des mouvements précis de l'utilisateur et ne s'applique que sur des zones suffisamment texturées de l'image.

L'invention permet de résoudre au moins un des problèmes exposés précédemment.

L'invention a ainsi pour objet un procédé pour ordinateur de détection d'interactions avec une application logicielle selon un mouvement d'au moins un objet situé dans le champ d'un capteur d'images relié à un ordinateur mettant en oeuvre le procédé, ledit capteur d'images transmettant un flux d'images audit ordinateur, ce procédé comprenant les étapes suivantes,

- réception d'au moins une première image dudit capteur d'images ;
- identification d'au moins une première région d'intérêt dans ladite première image, ladite au moins une première région d'intérêt correspondant à une partie de ladite au moins une première image ;
- réception d'au moins une seconde image dudit capteur d'images ;
- identification d'au moins une seconde région d'intérêt de ladite au moins une seconde image, ladite au moins une seconde région d'intérêt correspondant à ladite au moins une première région d'intérêt de ladite au moins une première image ;
- comparaison desdites au moins une première et seconde régions d'intérêt et détermination d'un masque d'intérêt caractérisant une variation d'au moins une caractéristique de points correspondants dans lesdites au moins une première et seconde régions d'intérêt ;
- détermination d'un mouvement dudit au moins un objet à partir dudit masque d'intérêt, ledit au moins un objet étant au moins partiellement représenté dans au moins l'une desdites au moins une première et seconde régions d'intérêt ; et,
- analyse dudit mouvement et, en réponse à ladite étape d'analyse, déclenchement ou non d'une action prédéterminée.

Le procédé selon l'invention permet ainsi de suivre des objets, en particulier des objets déformables et peu texturés, notamment pour des applications de réalité augmentée. En outre, la quantité limitée de traitement permet de mettre en oeuvre le procédé dans des dispositifs disposant de ressources (notamment de calcul) limitées telles que des plateformes mobiles. Par ailleurs, le procédé peut être utilisé avec un capteur d'images de faible qualité.

Le procédé selon l'invention permet de suivre des mouvements rapides d'objets, même en présence de flou dans les images acquises du capteur d'images. De plus, le traitement selon le procédé de l'invention ne dépend pas d'une colorimétrie spécifique des objets en mouvement, il est ainsi possible des objets tels qu'une main ou un objet texturé en mouvement devant le capteur d'image utilisé.

Le nombre de degré de liberté définissant les mouvements de chaque objet suivi peut être réglé pour chaque région d'intérêt.

Il est possible de suivre plusieurs zones d'intérêt simultanément afin, notamment, de permettre un contrôle multiple. Ainsi, par exemple, le suivi de deux mains permet d'augmenter le nombre d'interactions possible entre un utilisateur et une application logicielle.

De façon avantageuse, ladite étape de détermination d'un mouvement comprend une étape de détermination et d'appariement d'au moins un couple de points d'intérêt dans lesdites au moins une première et seconde images, au moins un point dudit au moins un couple de points d'intérêt appartenant audit masque d'intérêt. Le procédé selon l'invention permet ainsi de combiner les avantages liés au suivi de points d'intérêt tout en limitant les zones où sont localisés ces points afin de limiter le traitement et le concentrer sur l'objet suivi.

Selon un mode de réalisation particulier, ladite étape de détermination d'un mouvement comprend une étape de détermination et d'appariement d'une pluralité de couples de points d'intérêt dans lesdites au moins une première et seconde images, au moins un point de chacun desdits couples de points d'intérêt appartenant audit masque d'intérêt, ledit mouvement étant estimé selon une transformation d'un premier ensemble de points d'intérêt en un second ensemble de points d'intérêt, les points d'intérêt desdits premier et second ensembles appartenant à ladite pluralité de couple de points d'intérêt, les points d'intérêt dudit premier ensemble de points d'intérêt appartenant en outre à ladite au moins une première image et les points d'intérêt dudit second ensemble de points d'intérêt appartenant en outre à ladite au moins une seconde image. Le mouvement global d'une partie d'un objet peut ainsi être déterminé à partir des mouvements d'un ensemble de points d'intérêt.

Ladite transformation met de préférence en oeuvre une fonction de pondération basée sur une distance séparant deux points d'intérêts de mêmes couples de points d'intérêts de ladite pluralité de couples de points d'intérêt afin d'améliorer l'estimation du mouvement de l'objet suivi.

Toujours selon un mode de réalisation particulier, le procédé comprend en outre une étape de validation d'au moins un point d'intérêt de ladite au moins une première image, appartenant audit au moins un couple de points d'intérêt, selon ledit mouvement déterminé, ledit au moins un point d'intérêt validé étant utilisé pour suivre ledit objet dans au moins une troisième image suivant ladite au moins une seconde image et ledit au moins un point d'intérêt validé étant utilisé pour modifier un masque d'intérêt créé à partir desdites au moins une seconde et troisième images. Il est ainsi possible d'utiliser de mêmes points d'intérêt d'image en image s'ils contribuent efficacement à l'estimation du mouvement global de l'objet suivi. En outre, les points d'intérêt validés sont utilisés pour sélectionner de nouveaux points d'intérêt afin d'éviter une accumulation excessive de points d'intérêt dans une région limitée.

Ladite étape de comparaison desdites au moins une première et seconde régions d'intérêt comprend une étape de soustraction, point-à-point, de valeurs de points correspondants desdites au moins une première et seconde régions d'intérêt et une étape de comparaison d'un résultat de ladite soustraction à un seuil prédéterminé. Un tel mode de réalisation permet de combiner l'efficacité du procédé et des ressources de traitement limitées.

Selon un mode de réalisation particulier, le procédé comprend en outre une étape de détection d'au moins une caractéristique prédéterminée dans ladite au moins une première image, ladite au moins une première région d'intérêt étant au moins partiellement identifiée en réponse à ladite étape de détection. Le procédé selon l'invention peut ainsi s'initialiser ou se réinitialiser automatiquement selon des éléments du contenu de l'image traitée. Une telle caractéristique prédéterminée est, par exemple, une forme et/ou une couleur prédéterminée.

De façon avantageuse, le procédé comprend en outre une étape d'estimation d'au moins une seconde région d'intérêt modifiée dans ladite au moins une seconde image, ladite au moins une seconde région d'intérêt modifiée de ladite au moins une seconde image étant estimée selon ladite au moins une première région d'intérêt de ladite au moins une première image et de ladite au moins une seconde région d'intérêt de ladite au moins une seconde image. Le procédé selon l'invention permet ainsi d'anticiper le traitement de l'image suivante pour le suivi d'objet. Ladite estimation de ladite au moins une seconde région d'intérêt modifiée de ladite au moins une seconde image met par exemple en oeuvre un algorithme de suivi d'objets de type KLT.

Ledit mouvement peut notamment être caractérisé par une translation, une rotation et/ou un facteur d'échelle.

Lorsque ledit mouvement est caractérisé par un facteur d'échelle, le déclenchement ou non de ladite action prédéterminée peut être déterminé en fonction dudit facteur d'échelle. Ainsi, un facteur d'échelle peut, par exemple, caractériser un clic de souris.

Selon un mode de réalisation particulier, les mouvements d'au moins deux objets situés dans le champ dudit capteur d'images sont déterminés, le déclenchement ou non de ladite action prédéterminée étant déterminée selon une combinaison des mouvements associés auxdits au moins deux objets. Il est ainsi possible de déterminer un mouvement d'un objet en fonction de mouvements d'autres objets, notamment d'autres objets soumis à des contraintes de position relative.

L'invention a également pour objet un programme d'ordinateur comprenant des instructions adaptées à la mise en oeuvre de chacune des étapes du procédé décrit précédemment lorsque ledit programme est exécuté sur un ordinateur ainsi qu'un dispositif comprenant des moyens adaptés à la mise en oeuvre de chacune des étapes du procédé décrit précédemment. Les avantages de ce programme d'ordinateur et de ce procédé sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :

- la figure 1, comprenant les figures 1a et 1b, illustre deux images successives d'un flux d'images pouvant être utilisées pour déterminer le mouvement d'objets et l'interaction d'un utilisateur ;
- la figure 2, comprenant les figures 2a à 2d, illustre des exemples de variation d'une région d'intérêt d'une image avec la région d'intérêt correspondante d'une image suivante ;
- la figure 3 illustre schématiquement la détermination d'un mouvement d'un objet dont au moins une partie est représentée dans une région et dans un masque d'intérêt de deux images consécutives ;
- la figure 4 illustre schématiquement certaines étapes mises en oeuvre conformément à l'invention pour identifier, en régime permanent, des variations de position d'objets entre deux images consécutives (ou proches) d'une séquence d'images ;
- la figure 5 illustre certains aspects de l'invention lorsque quatre paramètres caractérisent un mouvement d'un objet suivi dans des images consécutives (ou proches) d'une séquence d'images ;
- la figure 6, comprenant les figures 6a, 6b et 6c, illustre un exemple de mise en oeuvre de l'invention dans le cadre d'un jeu de simulation de conduite où deux régions d'intérêt permettent le suivi des mains d'un utilisateur en temps réel, caractérisant un mouvement de volant d'un véhicule, dans une séquence d'images ; et,
- la figure 7 illustre un exemple de dispositif adapté à mettre en oeuvre l'invention.

De façon générale, l'invention vise le suivi d'objets dans des régions particulières d'images d'un flux d'images, ces régions, appelées régions d'intérêt, comprenant une partie des objets suivis et une partie de la scène représentée sur les images. Il a été observé que l'analyse de régions d'intérêt permet d'accélérer le temps de traitement et d'améliorer la détection de mouvement d'objets.

Les régions d'intérêt sont, de préférence, définies comme des formes bidimensionnelles, dans une image. Ces formes sont, par exemple, des rectangles ou des cercles. Elles sont, de préférence, constantes et prédéterminées. Les régions d'intérêt, dont la position initiale peut être prédéterminée, déterminée par un utilisateur, par un événement tel que l'apparition d'une forme ou d'une couleur ou selon des caractéristiques prédéfinies, par exemple à l'aide d'images clés, peuvent être caractérisées par des points d'intérêt, c'est-à-dire des points singuliers, tels que des points présentant un fort gradient de luminance. Ces régions peuvent également être déplacées en fonction des déplacements des objets suivis ou avoir une position et une orientation fixes dans l'image. L'utilisation de plusieurs régions d'intérêt permet, par exemple, d'observer plusieurs interactions concomitantes d'un utilisateur (une région d'intérêt peut correspondre à chacune de ses mains) et/ou plusieurs interactions concomitantes de plusieurs utilisateurs.

Les points d'intérêt sont utilisés pour trouver la variation des régions d'intérêt, dans un flux d'images, d'une image à une image suivante (ou proche), selon des techniques de suivi de points d'intérêt basées, par exemple, sur des algorithmes connus sous le nom de FAST, pour la détection, et KLT (sigle de Kanade, Lucas et Tomasi), pour le suivi dans l'image suivante. Les points d'intérêt d'une région d'intérêt peuvent varier au cours des images analysées selon, notamment, la déformation des objets suivis et leurs mouvements qui peuvent masquer des parties de la scène représentée sur les images et/ou faire sortir des parties de ces objets des zones d'intérêt.

Par ailleurs, les objets dont les mouvements sont susceptibles de créer une interaction sont suivis dans chaque région d'intérêt selon un mécanisme de suivi de points d'intérêt dans des masques définis dans les régions d'intérêt.

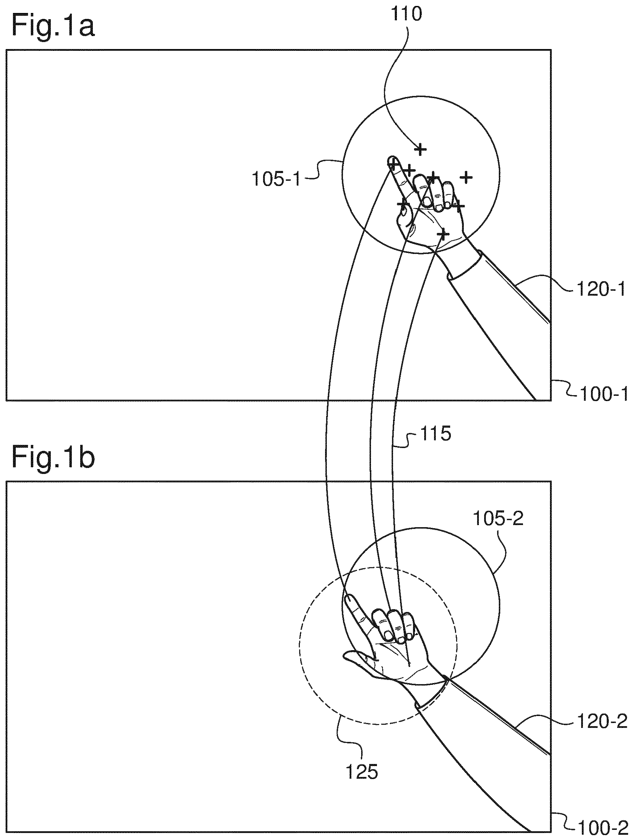

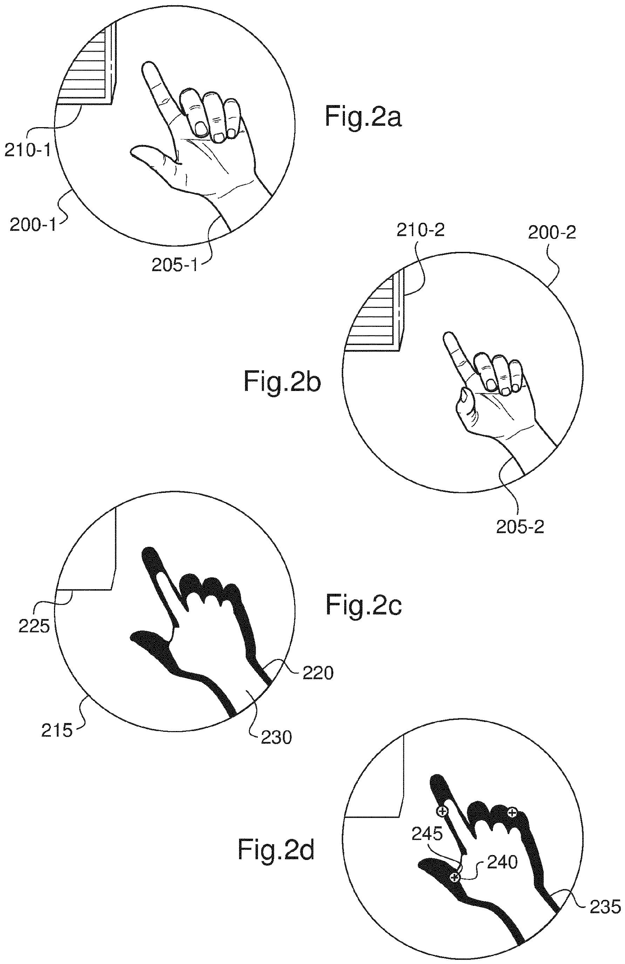

Les figures 1 et 2 illustrent le principe général de l'invention.

La figure 1, comprenant les figures 1a et 1b, illustre deux images successives d'un flux d'images pouvant être utilisées pour déterminer le mouvement d'objets et l'interaction d'un utilisateur.

Comme illustré sur la figure 1a, l'image 100-1 représente une scène ayant des éléments fixes (non représentés) tels que des éléments de décor et des éléments mobiles liés ici à des personnages (réels ou virtuels). L'image 100-1 comprend ici une région d'intérêt 105-1. Comme indiqué précédemment, plusieurs régions d'intérêt peuvent être traitées simultanément cependant, dans un souci de clarté, une seule région d'intérêt est ici représentée, le traitement des régions d'intérêt étant similaire pour chacune d'elles. Il est considéré que la forme de la région d'intérêt 105-1 ainsi que sa position initiale sont prédéterminées.

L'image 100-2 de la figure 1b représente une image suivant l'image 100-1 de la figure 1a dans une séquence d'images. Il est possible de définir, dans l'image 100-2, une région d'intérêt 105-2, correspondant à la position et aux dimensions de la région d'intérêt 105-1 définie dans l'image précédente, dans laquelle peuvent être estimées des perturbations. La région d'intérêt 105-1 est ainsi comparée à la région d'intérêt 105-2 de la figure 1b, par exemple par soustraction de ces parties d'images, pixel par pixel (acronyme de *PICture ELement* en terminologie anglo-saxonne), afin d'en extraire une carte de pixels considérés en mouvement. Ces pixels en mouvement constituent un masque de pixels d'intérêts (présenté sur la figure 2).

Des points d'intérêt, génériquement référencés 110 sur la figure 1a, peuvent être déterminés dans l'image 100-1, notamment dans la région d'intérêt 105-1, selon des algorithmes standard d'analyse d'images. Ces points d'intérêt peuvent être avantageusement détectés à des positions de la région d'intérêt qui appartiennent au masque de pixels d'intérêts.

Les points d'intérêt 110 définis dans la région d'intérêt 105-1 sont suivis dans l'image 100-2, de préférence dans la région d'intérêt 105-2, par exemple en utilisant les principes du suivi KLT par comparaison de portions des images 100-1 et 100-2 associées aux voisinages des points d'intérêt.

Ces appariements notés 115 entre l'image 100-1 et l'image 100-2 permettent d'estimer les déplacements de la main représentée avec la référence 120-1 sur l'image 100-1 et la référence 120-2 sur l'image 100-2. Il est ainsi possible d'obtenir la nouvelle position de la main dans l'image 100-2.

Le déplacement de la main peut ensuite être avantageusement utilisé pour déplacer la région d'intérêt 105-2 de l'image 100-2 vers la région d'intérêt modifiée 125 qui peut être utilisée pour estimer le déplacement de la main dans une image suivant l'image 100-2 du flux d'images. Le procédé de suivi d'objets peut ainsi se poursuivre de façon récursive.

Il est observé ici que, comme indiqué précédemment, certains points d'intérêt présents dans l'image 100-1 ont disparu dans l'image 100-2 en raison, notamment, de la présence et des mouvements de la main.

La détermination de points d'intérêt dans une image est, de préférence, limitée à la zone correspondant à la région d'intérêt correspondante telle que localisée sur l'image courante ou à une zone comprenant tout ou une partie de celle-ci lorsqu'un masque d'intérêt de pixels en mouvements est défini dans cette région d'intérêt.

Selon un mode de réalisation particulier, des informations caractérisant la pose relative des objets à suivre (par exemple la main référencée 120-1 sur la figure 1a) par rapport à une référence liée à la caméra dont sont issues les images sont estimées. De telles informations sont, par exemple, des informations de position bidimensionnelle (x, y), d'orientation ($\theta$) et de distance à la caméra, c'est-à-dire d'échelle (s), des objets à suivre.

De façon similaire, il est possible de suivre les modifications intervenues dans la région d'intérêt 125 définie dans l'image 100-2 par rapport à la région d'intérêt 105-1 de l'image 100-1 selon un mouvement estimé, entre l'image 100-2 et l'image suivante du flux d'images. A ces fins, une nouvelle région d'intérêt est tout d'abord identifiée dans l'image suivante à partir de la région d'intérêt 125. Lorsque la région d'intérêt est identifiée, elle est comparée avec la région d'intérêt 125 afin de déterminer les éléments modifiés, formant un masque comprenant des parties d'objets dont les mouvements doivent être déterminés.

La figure 2, comprenant les figures 2a à 2c, illustre la variation d'une région d'intérêt d'une image en comparaison avec la région d'intérêt correspondante, à la même position, d'une image suivante, comme décrit en référence à la figure 1. L'image résultant de cette comparaison, ayant la même forme que la région d'intérêt, est formée de pixels pouvant ici prendre deux états, un premier état étant associé, par défaut, à chaque pixel. Un second état est associé aux pixels correspondant aux pixels des régions d'intérêt dont la variation excède un seuil prédéterminé. Ce second état forme un masque utilisé ici pour limiter la recherche de points d'intérêt à des zones qui sont situées sur des objets suivis ou sont proches de ces derniers afin de caractériser le mouvement des objets suivis et, éventuellement, de déclencher des actions particulières.

La figure 2a représente une région d'intérêt d'une première image tandis que la figure 2b représente la région d'intérêt correspondante d'une image suivante, à la même position. Comme illustré sur la figure 2a, la région d'intérêt 200-1 comprend une main 205-1 ainsi qu'un autre objet 210-1. De même, la région d'intérêt correspondante, référencée 200-2 et illustrée sur la figure 2b, comprend la main et l'objet, référencés ici 205-2 et 210-2, respectivement. La main, génériquement référencée 205, a bougé de façon substantielle tandis que l'objet, génériquement référencé 210, n'a que faiblement bougé.

La figure 2c illustre l'image 215 résultant de la comparaison des régions d'intérêt 200-1 et 200-2. La partie noire, formant un masque d'intérêt, représente les pixels dont la différence est supérieure à un seuil prédéterminé tandis que la partie blanche représente les pixels dont la différence est inférieure à ce seuil. La partie noire comprend notamment la partie référencée 220 correspondant à la différence de position de la main 205 entre les régions d'intérêt 200-1 et 200-2. Elle comprend également la partie 225 correspondant à la différence de position de l'objet 210 entre ces régions d'intérêt. La partie 230 correspond à la partie de la main 205 présente dans ces deux régions d'intérêt.

L'image 215 représentée sur la figure 2c peut être analysée pour en déduire une interaction entre l'utilisateur ayant déplacé sa main dans le champ de la caméra dont sont issues les images dont sont extraites les régions d'intérêt 200-1 et 200-2 et un système informatique traitant ces images. Une telle analyse peut notamment consister à identifier le mouvement de points d'intérêt appartenant au masque d'intérêt ainsi formé, la recherche de points d'intérêt étant alors de préférence limitée au masque d'intérêt.

Cependant, une étape de squelettisation permettant notamment de supprimer des mouvements annexes tels que le mouvement matérialisé par la référence 225 est, de préférence, effectuée avant d'analyser le mouvement des points d'intérêt appartenant au masque d'intérêt. Cette étape de squelettisation peut prendre la forme d'un traitement morphologique comme par exemple des opérations d'ouverture ou de fermeture appliquées sur le masque d'intérêt.

En outre, de façon avantageuse, le masque d'intérêt obtenu est modifié afin de supprimer les parties situées autour des points d'intérêt identifiés de façon récursive entre l'image dont est extraite la région d'intérêt 200-1 et l'image la précédant.

La figure 2d illustre ainsi le masque d'intérêt représenté sur la figure 1c, référencé ici 235, auquel les parties 240 situées autour des points d'intérêt identifiés 245 ont été supprimées. Les parties 240 sont, par exemple, circulaires. Elles ont ici un rayon prédéterminé.

Le masque d'intérêt 235 est ainsi amputé de zones où se situent des points d'intérêt déjà détectés et où il n'est donc pas nécessaire d'en détecter de nouveaux. En d'autres termes, ce masque d'intérêt modifié 235 vient exclure une partie du masque d'intérêt 220 afin d'éviter l'accumulation de points d'intérêt dans une même zone de la région d'intérêt.

A nouveau, le masque d'intérêt 235 peut être utilisé pour identifier des points d'intérêt dont les mouvements peuvent être analysés afin de déclencher, le cas échéant, une action particulière.

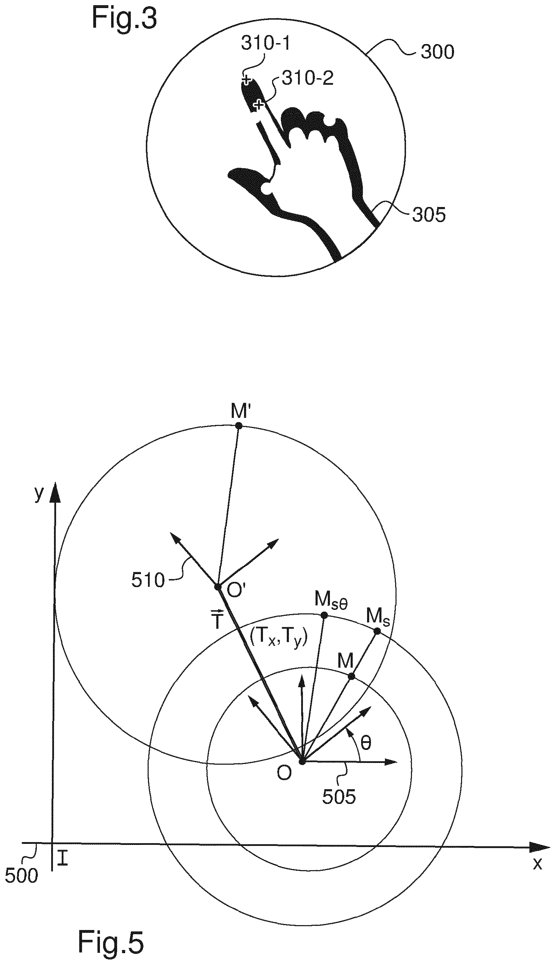

La figure 3 illustre à nouveau schématiquement la détermination d'un mouvement d'un objet dont au moins une partie est représentée dans une région et un masque d'intérêt de deux images consécutives (ou proches). L'image 300 correspond ici au masque d'intérêt résultant de la comparaison des régions d'intérêt 200-1 et 200-2 comme décrit en référence à la figure 2d. Cependant, une étape de squelettisation a été effectuée pour supprimer les perturbations (notamment la perturbation 225). Ainsi, l'image 300 comprend un masque 305 pouvant être utilisé pour identifier de nouveaux points d'intérêt dont les mouvements caractérisent le déplacement d'objets dans cette région d'intérêt.

A titre d'illustration, le point d'intérêt correspondant au bout de l'index de l'utilisateur est représenté. La référence 310-1 désigne ce point d'intérêt selon sa position dans la zone d'intérêt 200-1 et la référence 310-2 désigne ce point d'intérêt selon sa position dans la zone d'intérêt 200-2. Ainsi, en utilisant des techniques standards de suivi de points d'intérêt, par exemple un algorithme de suivi par flots optiques, il est possible, à partir du point d'intérêt 310-1 de la zone d'intérêt 200-1 de retrouver le point d'intérêt 310-2 correspondant de la zone d'intérêt 200-2 et, par conséquent, de trouver la translation correspondante.

L'analyse des déplacements de plusieurs points d'intérêt, notamment du point d'intérêt 310-1 et de points d'intérêt préalablement détectés et validés, par exemple les points d'intérêt 245, permet de déterminer un ensemble de paramètres de déplacement de l'objet suivi, notamment liés à une translation, une rotation et/ou à un changement d'échelle.

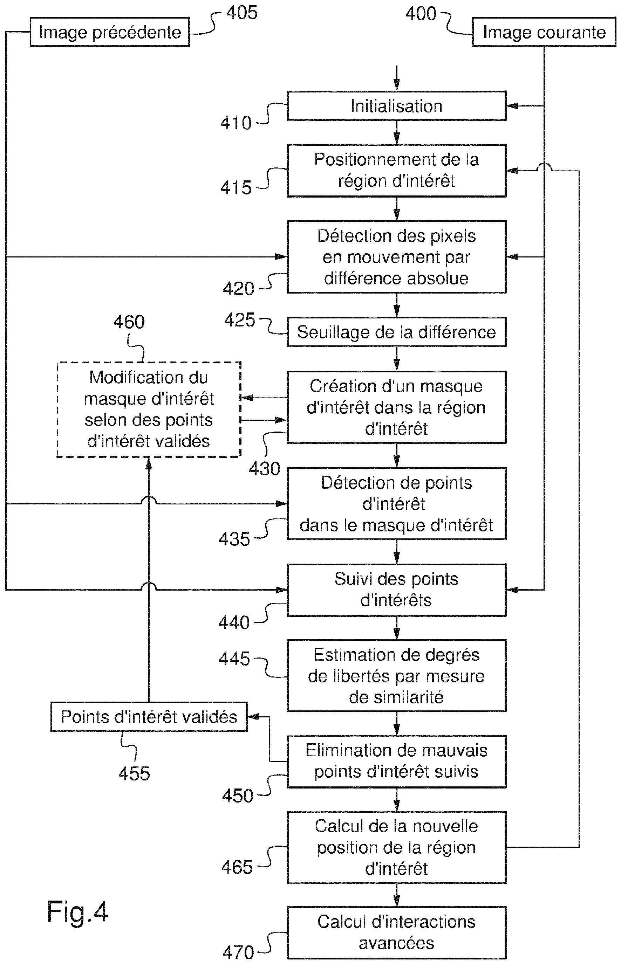

La figure 4 illustre schématiquement certaines étapes mises en oeuvre conformément à l'invention pour identifier, en régime permanent, des variations de pose d'objets entre deux images consécutives (ou proches) d'une séquence d'images.

Les images sont ici acquises via un capteur d'images tel qu'une caméra, notamment une caméra de type *webcam,* relié à un système informatique mettant en oeuvre le procédé décrit ici.

Après avoir acquis une image courante 400 et si cette image est la première à être traitée, c'est-à-dire si une image précédente 405 du même flux vidéo n'a pas été préalablement traitée, une première étape d'initialisation (étape 410) est exécutée. Cette étape a notamment pour objet de définir des caractéristiques d'au moins une région d'intérêt, par exemple une forme, une taille et une position initiale.

Comme décrit précédemment, une région d'intérêt peut être définie par rapport à une région d'intérêt correspondante déterminée dans une image précédente (en phase récursive de suivi, dans ce cas l'initialisation 410 n'est pas nécessaire) ou selon des caractéristiques prédéterminées et/ou des événements particuliers (correspondant à la phase d'initialisation).

Ainsi, à titre d'illustration, une région d'intérêt peut ne pas être définie dans un état initial, le système étant en attente d'un événement déclencheur, par exemple un mouvement particulier de l'utilisateur face à la caméra (les pixels en mouvement dans l'image sont analysés à la recherche d'un mouvement particulier), la localisation d'une couleur particulière telle que la couleur de la peau ou la reconnaissance d'un objet particulier prédéterminé dont la position définie celle de la région d'intérêt. Comme la position, la taille et la forme de la région d'intérêt peuvent être prédéfinies ou être déterminées selon des caractéristiques de l'événement détecté.

L'étape d'initialisation 410 peut donc prendre plusieurs formes en fonction de l'objet à suivre dans la séquence d'image et en fonction de l'application mise en oeuvre.

Il peut notamment s'agir d'une initialisation statique. Dans ce cas, la position initiale de la région d'intérêt est prédéterminée (détermination hors ligne) et l'algorithme de suivi est en attente d'une perturbation.

La phase d'initialisation peut également comprendre une étape de reconnaissance d'objets d'un type spécifique. Par exemple, les principes de détection de descripteurs de type ondelettes de Haar peuvent être mis en oeuvre. Le principe de ces descripteurs est notamment décrit dans l'article de Viola et Jones, « Rapid object detection using boosted cascade of simple features », Computer Vision and Pattern Recognition, 2001. Ces descripteurs permettent notamment la détection d'un visage, des yeux ou encore d'une main dans une image ou une partie d'une image. Durant la phase d'initialisation, il est ainsi possible de rechercher des objets particuliers soit dans toute l'image afin de positionner la région d'intérêt sur l'objet détecté soit dans une région d'intérêt elle-même pour déclencher le suivi de l'objet reconnu.

Une autre approche consiste à segmenter une image et à identifier certaines propriétés colorimétriques et certaines formes prédéfinies. Lorsqu'une forme et/ou une région segmentée de l'image traitée est similaire à l'objet recherché, par exemple la teinte de la peau et le contour de la main, le procédé de suivi est initialisé comme décrit précédemment.

Dans une étape suivante (étape 415), une région d'intérêt dont des caractéristiques ont été précédemment déterminées (lors de l'initialisation ou sur l'image précédente) est positionnée sur l'image courante pour extraire la partie d'image correspondante. Si l'image courante est la première image du flux vidéo à être traitée, cette dernière devient l'image précédente, une nouvelle image courante est acquise et l'étape 415 est répétée.

Cette partie d'image ainsi extraite est alors comparée à la région d'intérêt correspondante de l'image précédente (étape 420). Une telle comparaison peut notamment consister à soustraire chaque pixel de la région d'intérêt considérée de l'image courante avec le pixel correspondant de la région d'intérêt correspondante de l'image précédente.

La détection des points en mouvement est ainsi effectuée, selon cet exemple, par la différence absolue de parties de l'image courante et de l'image précédente. Cette différence permet de créer un masque d'intérêt pouvant être utilisé pour distinguer un objet en mouvement du décor, essentiellement statique. Cependant, la segmentation objet / décor n'étant a priori pas parfaite, il est possible de mettre à jour un tel masque d'intérêt de façon récursive en fonction des mouvements afin d'identifier les mouvements des pixels de l'objet suivi et les mouvements des pixels qui appartiennent au fond de l'image.

Un seuillage est alors de préférence effectué sur la différence entre pixels selon une valeur de seuil prédéterminé (étape 425). Un tel seuillage peut, par exemple, être effectué sur la luminance. Si un codage sur 8 bits est utilisé, sa valeur est, par exemple, égale à 100. Il permet d'isoler les pixels ayant un mouvement considéré comme étant suffisamment important entre deux images consécutives (ou proches). La différence entre les pixels des images courantes et précédentes est alors codée de façon binaire, par exemple noir si la différence excède le seuil prédéterminé caractérisant un mouvement et blanc dans le cas contraire. L'image binaire formée par les pixels dont la différence excède le seuil prédéterminé forme un masque d'intérêt ou de suivi dans la région d'intérêt considérée (étape 430).

Si des points d'intérêt ont été préalablement validés, le masque est modifié (étape 460) afin d'exclure du masque des zones dans lesquelles des points d'intérêt sont suivis récursivement. Ainsi, comme représenté par l'utilisation de traits pointillés, l'étape 460 n'est effectuée que s'il existe des points d'intérêt validés. Comme indiqué précédemment, cette étape consiste à supprimer du masque créé des zones, par exemple des disques d'un diamètre prédéterminé, autour des points d'intérêt préalablement validé.

Des points d'intérêt sont alors recherchés dans la région de l'image précédente correspondant au masque d'intérêt ainsi défini (étape 435), le masque d'intérêt étant ici le masque d'intérêt créé lors de l'étape 430 ou le masque d'intérêt créé lors de l'étape 430 et modifié au cours de l'étape 460.

La recherche de points d'intérêt est, par exemple, limitée à la détection de vingt points d'intérêt. Naturellement ce nombre peut être différent et peut être estimé selon la taille du masque d'intérêt.

Cette recherche est avantageusement réalisée à l'aide de l'algorithme connu sous le nom de FAST. Selon celui-ci, un cercle de Bresenham, par exemple de périmètre 16 pixels, est construit autour de chaque pixel de l'image. Si k pixels contigus (k a typiquement une valeur égale à 9, 10, 11 ou 12) contenus dans ce cercle sont soit tous d'intensité plus grande que le pixel central, soit tous d'intensité plus faible que le pixel central, alors le pixel central est considéré comme un point d'intérêt. Il est également possible d'identifier des points d'intérêt avec une approche basée sur des gradients d'image comme proposé dans l'approche connue sous le nom de détection de points de Harris.

Les points d'intérêt détectés dans l'image précédente selon le masque d'intérêt ainsi que, le cas échéant, les points d'intérêt préalablement détectés et validés sont utilisés pour identifier les points d'intérêt correspondant dans l'image courante.

Une recherche des points d'intérêt correspondant dans l'image courante est ainsi effectuée (étape 440), en utilisant, de préférence, une méthode connue sous le nom de flots optiques. L'utilisation de cette technique permet une meilleure robustesse lorsque l'image est floue, notamment grâce à l'utilisation de pyramides d'images lissées par un filtre gaussien. C'est par exemple l'approche mise en oeuvre par Lucas, Kanade et Tomasi dans l'algorithme connu sous le nom de KLT.

Lorsque les points d'intérêt de l'image courante, correspondant aux points d'intérêt de l'image précédente (déterminés selon le masque d'intérêt ou par suivi récursif), ont été identifiés, des paramètres de mouvement d'objets suivis dans la région d'intérêt de l'image précédente par rapport à la région d'intérêt de l'image courante sont estimés (étape 445). De tels paramètres, aussi appelés degrés de liberté, comprennent, par exemple, un paramètre de translation selon l'axe des x, un paramètre de translation selon l'axe des y, un paramètre de rotation et/ou un paramètre d'échelle (s), la transformation faisant passer un ensemble de points bidirectionnels d'un plan vers un autre, regroupant ces quatre paramètres, étant appelée la similarité. Ces paramètres sont, de préférence, estimés selon la méthode des moindres carrés non linéaire (NLSE, sigle de *Nonlinear Least Squares Error en* terminologie anglo-saxonne) ou méthode de Gauss-Newton. Cette méthode vise à minimiser une erreur de reprojection sur l'ensemble des points d'intérêt suivis. Afin d'améliorer l'estimation des paramètres du modèle (position et orientation), il est avantageux, dans un mode de réalisation spécifique, de rechercher ces paramètres de façon distincte. Ainsi, par exemple, il est pertinent d'appliquer la méthode des moindres carrés, dans un premier temps, pour n'estimer que les paramètres de translation (x,y), ces derniers étant plus facilement identifiables, puis, au cours d'une seconde itération, de calculer les paramètres de changement d'échelle et/ou de rotation (éventuellement de façon moins précise).

Dans une étape suivante, les points d'intérêt de l'image précédente, dont un correspondant a été trouvé dans l'image courante, sont, de préférence, analysés afin de déterminer, de façon récursive, des points d'intérêt valides par rapport au mouvement estimé dans l'étape précédente. A ces fins, il est vérifié, pour chaque point d'intérêt de l'image précédente préalablement déterminé (déterminés selon le masque d'intérêt ou par suivi récursif), si le déplacement, par rapport à celui-ci, du point d'intérêt correspondant de l'image courante est conforme au mouvement identifié. Dans l'affirmative, le point d'intérêt est considéré comme valide alors que dans le cas contraire, il est considéré comme non valide. Un seuil, typiquement exprimé en pixels et ayant une valeur prédéterminée, est avantageusement utilisé pour autoriser une certaine marge d'erreur entre la position théorique du point dans l'image courante (obtenue en appliquant les paramètres de l'étape 445) et sa position réelle (obtenue par le procédé de suivi de l'étape 440).

Les points d'intérêt valides, référencés ici 455, sont considérés comme appartenant à un objet dont le mouvement est suivi alors que les points non valides (aussi appelés *outliers* en terminologie anglo-saxonne) sont considérés comme appartenant au fond de l'image ou à des portions d'un objet qui ne sont plus visibles dans l'image.

Comme indiqué précédemment, les points d'intérêt valides sont suivis dans l'image suivante et sont utilisés pour modifier le masque d'intérêt créé par comparaison d'une région d'intérêt de l'image courante avec la région d'intérêt correspondante de l'image suivante (étape 460) afin d'exclure des portions de masque de pixels en mouvement entre les images courantes et suivantes comme décrit en référence à la figure 2d. Ce masque d'intérêt modifié permet ainsi de supprimer des portions d'images où des points d'intérêt sont suivis récursivement. Les points d'intérêt valides sont ainsi conservés pour plusieurs traitements sur des images successives et permettent notamment une stabilisation du suivi d'objets.

La nouvelle région d'intérêt (ou région d'intérêt modifiée) qui est utilisée pour traiter l'image courante et l'image suivante est alors estimée grâce aux degrés de libertés précédemment estimés (étape 445). Par exemple, si les degrés de libertés sont des translations x et y, la nouvelle position de la région d'intérêt est estimée selon la position précédente de la région d'intérêt, à l'aide de ces deux informations. Si un changement d'échelle (s) est estimé et considéré dans cette étape, il est possible, selon le scénario considéré, de modifier également la taille de la nouvelle région d'intérêt qui est utilisée dans les images courantes et suivantes du flux vidéo.

Parallèlement, lorsque les différents degrés de liberté sont calculés, il est possible d'estimer une interaction particulière selon ces paramètres (étape 470).

Selon un mode de réalisation particulier, l'estimation d'un changement d'échelle (s) est utilisée pour détecter le déclenchement d'une action de façon similaire à un clic de souris. De même, il est possible d'utiliser des changements d'orientation, particulièrement ceux autour de l'axe de vue de la caméra (appelé *Roll* en terminologie anglo-saxonne) pour, par exemple, permettre la rotation d'un élément virtuel affiché dans une scène ou encore contrôler un bouton de type « potentiomètre » afin, par exemple, de régler un volume sonore d'une application.

Cette détection d'interactions suivant un facteur d'échelle pour détecter une action telle qu'un clic de souris peut, par exemple, être mise en oeuvre de la façon suivante, en comptant le nombre d'images sur lesquelles la norme du vecteur de mouvement (translation) et le facteur d'échelle (déterminés selon des régions d'intérêt correspondantes) sont inférieurs à certaines valeurs prédéterminées. Un tel nombre caractérise une stabilité du mouvement des objets suivis. Si le nombre d'images sur lesquelles le mouvement est stable dépasse un certain seuil, le système se place dans un état d'attente de détection d'un clic. Un clic est alors détecté en mesurant la moyenne des différences absolues des facteurs d'échelle entre des images courantes et précédentes, ceci sur un nombre donné d'images. Si la somme ainsi calculée dépasse un certain seuil, le clic est validé.

Lorsqu'un objet n'est plus suivi dans une séquence d'images (soit parce que celui-ci disparaît de l'image, soit parce qu'il est perdu), l'algorithme retourne, de préférence, à l'étape d'initialisation. En outre, un décrochage conduisant à ré-exécuter l'étape d'initialisation peut être identifié en mesurant les mouvements d'un utilisateur. Ainsi, il peut être décidé de réinitialiser le procédé lorsque ces mouvements sont stables ou inexistants pendant une période prédéterminée ou lorsqu'un objet suivi sort du champ de vue du capteur d'images.

La figure 5 illustre de façon plus précise certains aspects de l'invention lorsque quatre paramètres caractérisent un mouvement d'un objet suivi dans des images consécutives (ou proches) d'une séquence d'images. Ces quatre paramètres sont ici une translation notée $(T_x, T_y)$, une rotation notée $\theta$ autour de l'axe optique du capteur d'images et un facteur d'échelle noté s. Ces quatre paramètres représentent une similarité qui est la transformation permettant de transformer un point M d'un plan vers un point M'.

Comme illustré sur la figure 5, O représente l'origine d'un repère 505 de l'objet dans l'image précédente et O' représente l'origine d'un repère 510 de l'objet dans l'image courante, obtenu conformément au procédé de suivi d'objets, le repère image portant ici la référence 500. Il est alors possible d'exprimer la transformation du point M vers le point M' par le système d'équations non linéaires suivant :

$$X_{M'} = s.(X_M - X_O).\cos(\theta) - s.(Y_M - Y_O).\sin(\theta) + T_x + X_O$$

$$Y_{M'} = s \cdot (X_M - X_O) \cdot \sin(\theta) + s \cdot (Y_M - Y_O) \cdot \cos(\theta) + T_y + Y_O$$

où $(X_M, Y_M)$ sont les coordonnées du point M exprimées dans le repère image, $(X_0, Y_0)$ sont les coordonnées du point O dans le repère image et $(X_{M'}, Y_{M'})$ sont les coordonnées du point M' dans le repère image.

Les points $M_s$ et $M_{s\theta}$ représentent respectivement la transformation du point M selon le changement d'échelle s et le changement d'échelle s combiné à la rotation $\theta$, respectivement.

Comme décrit précédemment, il est possible d'utiliser l'approche des moindres carrés non linéaires pour résoudre ce système en utilisant tous les points d'intérêt suivis dans l'étape 440 décrite en référence à la figure 4.

Pour calculer la nouvelle position de l'objet dans l'image courante (étape 465 de la figure 4), il suffit théoriquement d'appliquer la translation $(T_x, T_y)$ estimée à la position précédente de l'objet de la manière suivante :

$$X_{0'} = X_0 + T_x$$

$$Y_{0'} = Y_0 + T_y$$

où $(X_{0'}, Y_{0'})$ sont les coordonnées du point O' dans le repère image.

De façon avantageuse, les dérivées partielles de chaque point considéré, c'est-à-dire les mouvements associés à chacun de ces points, sont pondérées en fonction du mouvement associé. Ainsi les points d'intérêt les plus en mouvement ont une importance plus grande dans l'estimation des paramètres, ce qui évite que les points d'intérêt liés au fond de l'image (*background*) perturbent le suivi d'objets.

Ainsi, il a été observé qu'il est avantageux d'ajouter une influence du centre de gravité des points d'intérêt suivis dans l'image courante à l'équation précédente. Ce centre de gravité correspond approximativement au centre de gravité local du mouvement (les points suivis dans l'image courante sont issus de points en mouvement dans l'image précédente). Le centre de la région d'intérêt a ainsi tendance à se translater vers le centre du mouvement tant que la distance de l'objet au centre de gravité est supérieure au mouvement de translation estimé. L'origine du repère dans l'image courante, caractérisant le déplacement de l'objet suivi, est ainsi avantageusement calculé selon la relation suivante :

$$X_{O'} = X_O + W_{GC} \cdot (X_{GC} - X_O) + W_T \cdot T_x$$

$$Y_{O'} = Y_O + W_{GC} \cdot (Y_{GC} - Y_O) + W_T \cdot T_y$$

où $(X_{GC}, Y_{GC})$ représente le centre de gravité des points d'intérêt dans l'image courante et $W_{GC}$ représente le poids sur l'influence du centre de gravité courant et $W_T$ le poids sur l'influence de la translation. Le paramètre $W_{GC}$ est ici corrélé positivement avec la vitesse de déplacement de l'objet suivi tandis que le paramètre $W_T$ peut être fixé en fonction de l'influence souhaitée de la translation.

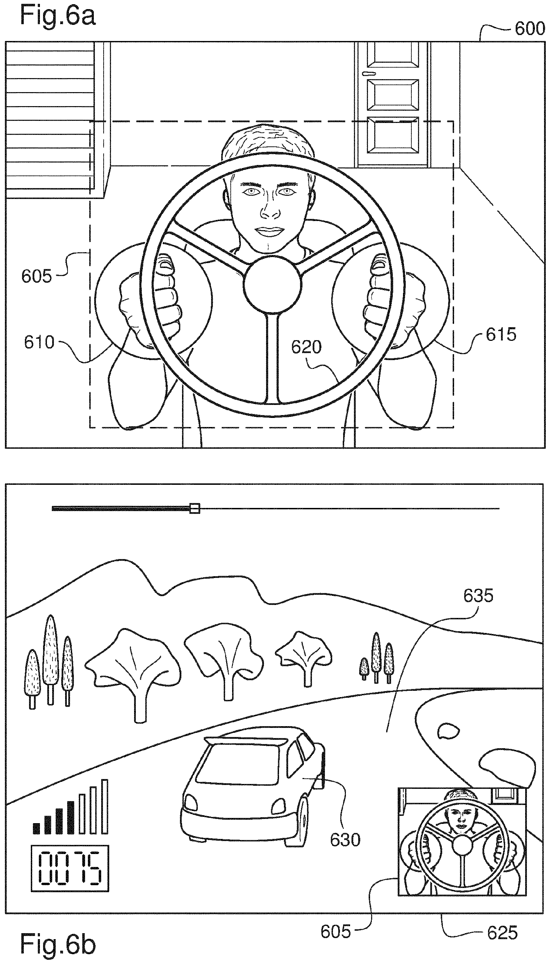

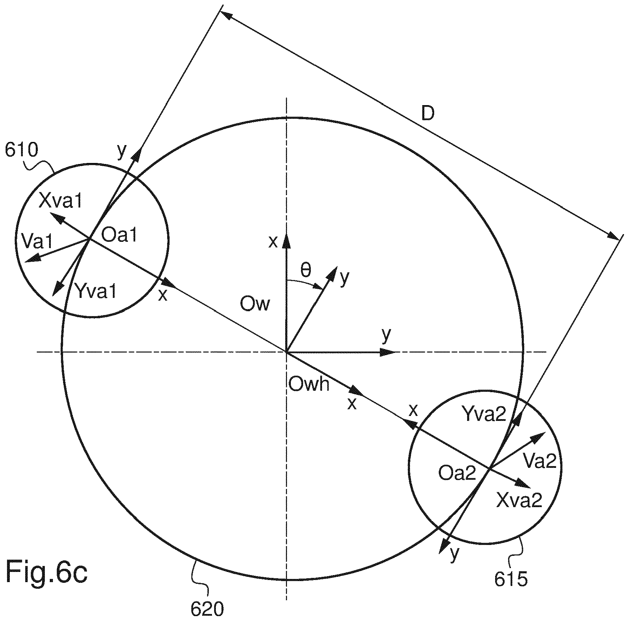

La figure 6, comprenant les figures 6a, 6b et 6c, illustre un exemple de mise en oeuvre de l'invention dans le cadre d'un jeu de simulation de conduite où deux régions d'intérêt permettent le suivi des mains d'un utilisateur en temps réel, caractérisant un mouvement de volant d'un véhicule, dans une séquence d'images.

Plus spécifiquement, la figure 6a présente le contexte du jeu, de façon imagée, tandis que la figure 6b représente le visuel du jeu tel que perçu par un utilisateur. La figure 6c illustre l'estimation des paramètres de mouvement, ou degrés de liberté, des objets suivis pour en déduire un mouvement d'un volant d'un véhicule.

La figure 6a comprend une image 600 extraite de la séquence d'images issue du capteur d'images utilisé. Ce dernier est placé en face de l'utilisateur, comme s'il était fixé au pare-brise du véhicule conduit par l'utilisateur. Cette image 600 contient ici une zone 605 comprenant deux régions d'intérêt circulaires 610 et 615 associées à un volant 620 dessiné en surimpression par image de synthèse. L'image 600 comprend également des éléments de la scène réelle dans laquelle se trouve l'utilisateur.

La position initiale des régions 610 et 615 est fixée sur une ligne horizontale prédéterminée, à égale distance, de part et d'autre, d'un point représentant le centre du volant, en attente de perturbation. Lorsque l'utilisateur positionne ses mains dans ces deux régions, il est alors en mesure de tourner le volant soit vers la gauche, soit vers la droite. Le mouvement des régions 610 et 615 est ici contraint en fonction du rayon du cercle correspondant au volant 620. L'image représentant le volant bouge avec les mains de l'utilisateur, par exemple selon le mouvement moyen des deux mains.

Le rayon du cercle correspondant au volant 620 peut également varier lorsque l'utilisateur rapproche ou éloigne ses mains du centre de ce cercle.

Ces deux degrés de libertés sont ensuite avantageusement utilisés pour contrôler l'orientation d'un véhicule (position des mains sur le cercle correspondant au volant 620) et sa vitesse (facteur d'échelle lié à la position des mains par rapport au centre du cercle correspondant au volant 620).

La figure 6b, illustrant le visuel 625 de l'application, comprend la portion d'image 605 extraite de l'image 600. Ce visuel permet à l'utilisateur d'observer et contrôler ses mouvements. La portion d'image 605 peut avantageusement être représentée comme un rétroviseur de voiture dans lequel le conducteur peut observer son comportement.

Les régions 610 et 615 de l'image 600 permettent de contrôler les mouvements du volant 620, c'est-à-dire de contrôler la direction du véhicule référencé 630 sur le visuel 625 ainsi que sa vitesse par rapport aux éléments 635 du décor, le véhicule 630 et les éléments 635 du décor étant ici créés par images de synthèse. Conformément aux applications standard de conduite, le véhicule peut se déplacer dans le décor et percuter certains éléments.

La figure 6c décrit plus précisément l'estimation des paramètres de libertés liés à chacune des régions d'intérêt et de déduire les degrés de libertés du volant. Dans cette mise en oeuvre, les paramètres à estimer sont l'orientation $\theta$ du volant et son diamètre D.

Afin d'analyser les composantes du mouvement, plusieurs repères sont définis. Le repère Ow correspond ici à un repère de référence (repère « monde »), le repère Owh est un repère local lié au volant 620 et les repères Oa1 et Oa2 sont des repères locaux liés aux régions d'intérêt 610 et 615. Les vecteurs Va1(Xva1, Yva1) et Va2(Xva2, Yva2) sont les vecteurs déplacement résultant de l'analyse du mouvement des mains de l'utilisateur dans les régions d'intérêt 610 et 615, exprimé dans les repères Oa1 et Oa2, respectivement.

La nouvelle orientation $\theta'$ du volant est calculée par rapport à son orientation $\theta$ précédente et à partir du mouvement des mains de l'utilisateur (déterminé par l'intermédiaire des deux régions d'intérêt 610 et 615). Le mouvement du volant est ainsi un mouvement contraint lié au mouvement de plusieurs zones d'intérêt. La nouvelle orientation $\theta'$ peut être calculée de la façon suivante :

$$\theta' = \theta + (\,(\Delta\theta1 + \Delta\theta2)\,/\,2)$$

où $\Delta\theta1$ et $\Delta\theta2$, représentent la rotation des mains de l'utilisateur.
$\Delta\theta1$ peut être calculé par la relation suivante :
$\Delta\theta1 = atan2(Yva1wh , D/2)$
avec Yva1wh = Xva1 * sin(-($\theta + \pi$)) + Yva1 * cos(-($\theta + \pi$)) qui caractérise la translation sur l'axe Y dans le repère Owh.
$\Delta\theta2$ peut être calculé de façon similaire.

De même, le nouveau diamètre D' du volant est calculé à partir de son diamètre D précédent et à partir du mouvement des mains de l'utilisateur (déterminé par l'intermédiaire des deux régions d'intérêt 610 et 615). Il peut être calculé de la façon suivante :

$$D' = D + (\,(Xva1wh + Xva2wh)\,/\,2)$$

avec Xva1wh = Xva1 * cos(-($\theta + \pi$)) - Yva1 * sin(-($\theta + \pi$)) et
Xva2wh = Xva2 * cos( - $\theta$) - Yva2 * sin(-$\theta$)

Ainsi, connaissant la position angulaire du volant et son diamètre, le scénario de jeu peut notamment calculer une image de synthèse correspondante.

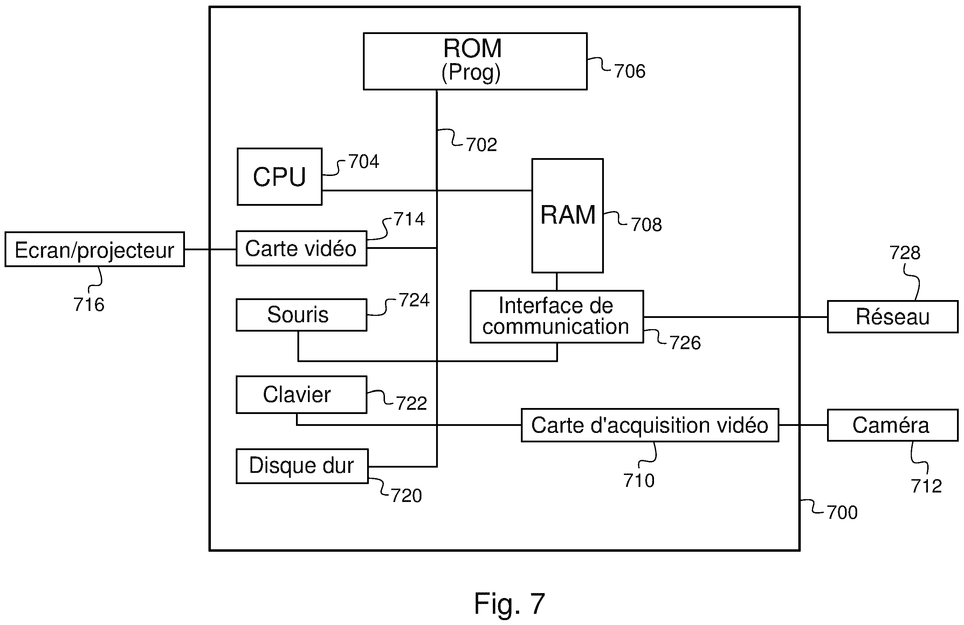

La figure 7 illustre un exemple de dispositif pouvant être utilisé pour identifier des mouvements d'objets représentés sur des images issues d'une caméra et déclencher des actions particulières selon des mouvements identifiés. Le dispositif 700 est par exemple un téléphone mobile de type *smartphone*, un assistant numérique personnel, un micro-ordinateur ou une station de travail.

Le dispositif 700 comporte de préférence un bus de communication 702 auquel sont reliés :

- une unité centrale de traitement ou microprocesseur 704 (CPU, *Central Processing Unit*) ;
- une mémoire morte 706 (ROM, *Read Only Memory*) pouvant comporter le système d'exploitation et des programmes tels que "Prog" ;
- une mémoire vive ou mémoire cache 708 (RAM, *Random Access Memory*) comportant des registres adaptés à enregistrer des variables et paramètres créés et modifiés au cours de l'exécution des programmes précités ;

- une carte d'acquisition vidéo 710 reliée à une caméra 712 ; et,
- une carte graphique 714 reliée à un écran ou à un projecteur 716.

Optionnellement, le dispositif 700 peut également disposer des éléments suivants :

- un disque dur 720 pouvant comporter les programmes "Prog" précités et des données traitées ou à traiter selon l'invention ;
- un clavier 722 et une souris 724 ou tout autre dispositif de pointage comme un crayon optique, un écran tactile ou une télécommande permettant à l'utilisateur d'interagir avec les programmes selon l'invention, en particulier lors des phases d'installation et/ou d'initialisation ;
- une interface de communication 726 reliée à un réseau de communication distribué 728, par exemple le réseau Internet, l'interface étant apte à transmettre et à recevoir des données ; et,
- un lecteur de cartes mémoires (non représenté) adapté à y lire ou à y écrire des données traitées ou à traiter selon l'invention.

Le bus de communication permet la communication et l'interopérabilité entre les différents éléments inclus dans le dispositif 700 ou reliés à lui. La représentation du bus n'est pas limitative et, notamment, l'unité centrale est susceptible de communiquer des instructions à tout élément du dispositif 700 directement ou par l'intermédiaire d'un autre élément du dispositif 700.

Le code exécutable de chaque programme permettant à l'appareil programmable de mettre en oeuvre les processus selon l'invention, peut être stocké, par exemple, dans le disque dur 720 ou en mémoire morte 706.

Selon une variante, le code exécutable des programmes pourra être reçu par l'intermédiaire du réseau de communication 728, via l'interface 726, pour être stocké de façon identique à celle décrite précédemment.

De manière plus générale, le ou les programmes pourront être chargés dans un des moyens de stockage du dispositif 700 avant d'être exécutés.

L'unité centrale 704 va commander et diriger l'exécution des instructions ou portions de code logiciel du ou des programmes selon l'invention, instructions qui sont stockées dans le disque dur 720 ou dans la mémoire morte 706 ou bien dans les autres éléments de stockage précités. Lors de la mise sous tension, le ou les programmes qui sont stockés dans une mémoire non volatile, par exemple le disque dur 720 ou la mémoire morte 706, sont transférés dans la mémoire vive 708 qui contient alors le code exécutable du ou des programmes selon l'invention, ainsi que des registres pour mémoriser les variables et paramètres nécessaires à la mise en oeuvre de l'invention.

Il convient de noter que l'appareil de communication comportant le dispositif selon l'invention peut également être un appareil programmé. Cet appareil contient alors le code du ou des programmes informatiques par exemple figé dans un circuit intégré à application spécifique (ASIC).

Naturellement, pour satisfaire des besoins spécifiques, une personne compétente dans le domaine de l'invention pourra appliquer des modifications dans la description précédente.

**Revendications**

1. Procédé pour ordinateur de détection d'interactions avec une application logicielle selon un mouvement d'au moins un objet situé dans le champ d'un capteur d'images relié à un ordinateur mettant en oeuvre le procédé, ledit capteur d'images transmettant un flux d'images audit ordinateur, ce procédé étant **caractérisé en ce qu'**il comprend les étapes suivantes,

   - réception d'au moins une première image dudit capteur d'images ;
   - identification d'au moins une première région d'intérêt dans ladite première image, ladite au moins une première région d'intérêt correspondant à une partie de ladite au moins une première image ;
   - réception d'au moins une seconde image dudit capteur d'images ;
   - identification d'au moins une seconde région d'intérêt de ladite au moins une seconde image, ladite au moins une seconde région d'intérêt correspondant à ladite au moins une première région d'intérêt de ladite au moins une première image ;
   - comparaison (440) desdites au moins une première et seconde régions d'intérêt dont la différence détermine un masque d'intérêt caractérisant une variation d'au moins une caractéristique de points correspondants dans lesdites au moins une première et seconde régions d'intérêt ;
   - détermination (445) d'un mouvement dudit au moins un objet à partir dudit masque d'intérêt, ledit au moins un objet étant au moins partiellement représenté dans au moins l'une desdites au moins une première et seconde régions d'intérêt ; et,

- analyse (470) dudit mouvement et, en réponse à ladite étape d'analyse, déclenchement ou non d'une action prédéterminée.

2. Procédé selon la revendication 1 selon lequel ladite étape de détermination (445) d'un mouvement comprend une étape de détermination et d'appariement d'au moins un couple de points d'intérêt dans lesdites au moins une première et seconde images, au moins un point dudit au moins un couple de points d'intérêt appartenant audit masque d'intérêt.

3. Procédé selon la revendication 2 selon lequel ladite étape de détermination (445) d'un mouvement comprend une étape de détermination et d'appariement d'une pluralité de couples de points d'intérêt dans lesdites au moins une première et seconde images, au moins un point de chacun desdits couples de points d'intérêt appartenant audit masque d'intérêt, ledit mouvement étant estimé selon une transformation d'un premier ensemble de points d'intérêt en un second ensemble de points d'intérêt, les points d'intérêt desdits premier et second ensembles appartenant à ladite pluralité de couple de points d'intérêt, les points d'intérêt dudit premier ensemble de points d'intérêt appartenant en outre à ladite au moins une première image et les points d'intérêt dudit second ensemble de points d'intérêt appartenant en outre à ladite au moins une seconde image.

4. Procédé selon la revendication 3 selon lequel ladite transformation met en oeuvre une fonction de pondération basée sur une distance séparant deux points d'intérêts de mêmes couples de points d'intérêts de ladite pluralité de couples de points d'intérêt.

5. Procédé selon la revendication 3 ou la revendication 4 comprenant en outre une étape de validation d'au moins un point d'intérêt de ladite au moins une première image, appartenant audit au moins un couple de points d'intérêt, selon ledit mouvement déterminé, ledit au moins un point d'intérêt validé étant utilisé pour suivre ledit objet dans au moins une troisième image suivant ladite au moins une seconde image et ledit au moins un point d'intérêt validé étant utilisé pour modifier un masque d'intérêt créé à partir desdites au moins une seconde et troisième images.

6. Procédé selon l'une quelconque des revendications précédentes selon lequel ladite étape de comparaison desdites au moins une première et seconde régions d'intérêt comprend une étape de soustraction, point-à-point, de valeurs de points correspondants desdites au moins une première et seconde régions d'intérêt et une étape de comparaison d'un résultat de ladite soustraction à un seuil prédéterminé.

7. Procédé selon l'une quelconque des revendications précédentes comprenant en outre une étape de détection d'au moins une caractéristique prédéterminée dans ladite au moins une première image, ladite au moins une première région d'intérêt étant au moins partiellement identifiée en réponse à ladite étape de détection.

8. Procédé selon la revendication 7 selon lequel ladite au moins une caractéristique prédéterminée est une forme et/ou une couleur prédéterminée.

9. Procédé selon l'une quelconque des revendications précédentes comprenant en outre une étape d'estimation d'au moins une seconde région d'intérêt modifiée dans ladite au moins une seconde image, ladite au moins une seconde région d'intérêt modifiée de ladite au moins une seconde image étant estimée selon ladite au moins une première région d'intérêt de ladite au moins une première image et de ladite au moins une seconde région d'intérêt de ladite au moins une seconde image.

10. Procédé selon la revendication 9 selon lequel ladite estimation de ladite au moins une seconde région d'intérêt modifiée de ladite au moins une seconde image met en oeuvre un algorithme de suivi d'objets de type KLT.

11. Procédé selon l'une quelconque des revendications précédentes selon lequel ledit mouvement est **caractérisé par** une translation, une rotation et/ou un facteur d'échelle.

12. Procédé selon l'une quelconque des revendications 1 à 10 selon lequel ledit mouvement est **caractérisé par** un facteur d'échelle, le déclenchement ou non de ladite action prédéterminée étant déterminé en fonction dudit facteur d'échelle.

13. Procédé selon l'une quelconque des revendications précédentes selon lequel les mouvements d'au moins deux objets situés dans le champ dudit capteur d'images sont déterminés, le déclenchement ou non de ladite action prédéterminée étant déterminée selon une combinaison des mouvements associés auxdits au moins deux objets.

**14.** Programme d'ordinateur comprenant des instructions adaptées à la mise en oeuvre de chacune des étapes du procédé selon l'une quelconque des revendications précédentes lorsque ledit programme est exécuté sur un ordinateur.

**15.** Dispositif comprenant des moyens adaptés à la mise en oeuvre de chacune des étapes du procédé selon l'une quelconque des revendications 1 à 13.


**Patentansprüche**

**1.** Ein Computerverfahren zum Detektieren von Interaktionen mit einer Softwareanwendung gemäß einer Bewegung wenigstens eines Objektes, das in dem Feld eines Bildsensors angeordnet ist, der mit einem Computer verbunden ist, der das Verfahren implementiert, wobei der Bildsensor einen Strom von Bildern an den Computer liefert, wobei das Verfahren **dadurch gekennzeichnet ist, dass** es die folgenden Schritte aufweist

- Empfangen wenigstens eines ersten Bildes von dem Bildsensor;
- Identifizieren wenigstens eines ersten Bereichs, der von Interesse ist, in dem ersten Bild, wobei der wenigstens eine erste Bereich von Interesse einem Teil des wenigstens einen ersten Bildes entspricht;
- Empfangen wenigstens eines zweiten Bildes von dem Bildsensor;
- Identifizieren wenigstens eines zweiten Bereichs von Interesse des wenigsten einen zweiten Bildes, wobei der wenigstens eine zweite Bereich von Interesse dem wenigstens einen ersten Bereich von Interesse des wenigstens einen ersten Bildes entspricht;
- Vergleichen (440) der wenigstens einen ersten und zweiten Bereiche von Interesse, wobei die Differenz eine Maske von Interesse bestimmt, die eine Variation wenigstens eines Merkmals entsprechender Punkte in den wenigstens einen ersten und zweiten Bereichen von Interesse charakterisiert;
- Bestimmen (445) einer Bewegung des wenigstens einen Objektes von der Maske von Interesse, wobei das wenigstens eine Objekt wenigstens teilweise in wenigstens einem der wenigstens einen ersten und zweiten Bereiche von Interesse dargestellt ist; und
- Analysieren (470) der Bewegung und, ansprechend auf den Analyseschritt, Auslösen oder Nicht-Auslösen einer vorbestimmten Aktion.

**2.** Verfahren nach Anspruch 1, wobei der Schritt (445) des Bestimmens einer Bewegung einen Schritt des Bestimmens und des Abgleichens wenigstens eines Paares von Punkten von Interesse in dem wenigstens einen ersten und zweiten Bild aufweist, wobei wenigstens ein Punkt des wenigstens einen Paares von Punkten von Interesse zu der Maske von Interesse gehört.

**3.** Verfahren gemäß Anspruch 2, wobei der Schritt (445) des Bestimmens einer Bewegung einen Schritt des Bestimmens und Abgleichens einer Vielzahl von Paaren von Punkten von Interesse in dem wenigstens einen ersten und zweiten Bild aufweist, wobei wenigstens ein Punkt jedes der Paare von Punkten von Interesse zu der Maske von Interesse gehört, wobei die Bewegung auf der Grundlage einer Transformation eines ersten Satzes von Punkten von Interesse in einen zweiten Satz von Punkten von Interesse geschätzt wird, wobei die Punkte von Interesse der ersten und zweiten Sätze zu der Vielzahl von Paaren von Punkten von Interesse gehören, wobei die Punkte von Interesse des ersten Satzes von Punkten von Interesse weiter zu wenigstens einem ersten Bild gehören und die Punkte von Interesse des zweiten Satzes von Punkten von Interesse weiter zu dem wenigstens einen zweiten Bild gehören.

**4.** Verfahren nach Anspruch 3, wobei die Transformation eine Gewichtungsfunktion basierend auf einer Distanz zwischen zwei Punkten von Interesse von dem gleichen Paar von Punkten von Interesse der Vielzahl von Paaren von Punkten von Interesse implementiert.

**5.** Verfahren nach Anspruch 3 oder Anspruch 4, das weiter einen Schritt des Validierens wenigstens eines Punktes von Interesse des wenigstens einen ersten Bildes aufweist, der zu dem wenigstens einen Paar von Punkten von Interesse gehört, und zwar gemäß der bestimmten Bewegung, wobei der wenigstens eine validierte Punkt von Interesse verwendet wird zum Nachverfolgen des Objektes in wenigstens einem dritten Bild, das dem wenigstens einen zweiten Bild folgt und wobei der wenigstens eine validierte Punkt von Interesse verwendet wird zum Modifizieren einer Maske von Interesse, die auf der Grundlage des wenigstens einen zweiten und dritten Bildes erzeugt wird.

**14**

**6.** Verfahren nach einem der vorhergehenden Ansprüche, wobei der Schritt des Vergleichens des wenigstens einen ersten und zweiten Bereichs von Interesse einen Schritt zum Durchführen einer Subtraktion, Punkt für Punkt, von Werten von entsprechenden Punkten der wenigstens einen ersten und zweiten Bereiche von Interesse und einen Schritt des Vergleichens eines Ergebnisses der Subtraktion mit einem vorbestimmten Schwellenwert aufweist.

**7.** Verfahren nach einem der vorhergehenden Ansprüche, das weiter einen Schritt des Detektierens wenigstens eines vorbestimmten Merkmals in dem wenigstens einen ersten Bild aufweist, wobei wenigstens ein erster Bereich von Interesse wenigstens teilweise ansprechend auf den Detektionswert identifiziert wird.

**8.** Verfahren nach Anspruch 7, wobei das wenigstens eine vorbestimmte Merkmal eine vorbestimmte Form und/oder eine vorbestimmte Farbe ist.

**9.** Verfahren gemäß einem der vorhergehenden Ansprüche, das weiter einen Schritt des Schätzens wenigstens eines modifizierten zweiten Bereichs von Interesse in dem wenigstens einen zweiten Bild aufweist, wobei der wenigstens eine modifizierte zweite Bereich von Interesse des wenigstens einen zweiten Bildes gemäß dem wenigstens einen ersten Bereich von Interesse des wenigstens einen ersten Bildes und dem wenigstens einen zweiten Bereich von Interesse des wenigstens einen zweiten Bildes geschätzt wird.

**10.** Verfahren nach Anspruch 9, wobei die Schätzung des wenigstens einen modifizierten zweiten Bereichs von Interesse des wenigstens einen zweiten Bildes einen Objekt-Tracking- bzw. -Nachverfolgungsalgorithmus vom KLT-Typ implementiert.

**11.** Verfahren gemäß einem der vorhergehenden Ansprüche, wobei die Bewegung durch eine Translation, eine Rotation und/oder einen Skalierungsfaktor charakterisiert ist.

**12.** Verfahren gemäß einem der Ansprüche 1 bis 10, wobei die Bewegung durch einen Skalierungsfaktor charakterisiert ist, wobei ob die vorbestimmte Aktion ausgelöst wird oder nicht auf der Grundlage des Skalierungsfaktors bestimmt wird.

**13.** Verfahren nach einem der vorhergehenden Ansprüche, wobei die Bewegungen von wenigstens zwei Objekten, die in dem Feld des Bildsensors angeordnet sind, bestimmt werden, wobei ob die vorbestimmte Aktion ausgelöst wird oder nicht gemäß einer Kombination der Bewegungen, die mit den wenigstens zwei Objekten assoziiert sind, bestimmt wird.

**14.** Ein Computerprogramm, das Instruktionen aufweist, die ausgelegt sind zum Durchführen jedes der Schritte des Verfahrens gemäß einem der vorhergehenden Ansprüche, wenn das Programm auf einem Computer ausgeführt wird.

**15.** Eine Einrichtung, die Mittel aufweist, die ausgelegt sind für die Implementierung jedes der Schritte des Verfahrens gemäß einem der Ansprüche 1 bis 13.

**Claims**

**1.** A computer method for detecting interactions with a software application according to a movement of at least one object situated in the field of an image sensor connected to a computer implementing the method, said image sensor providing a stream of images to said computer, the method being **characterized in that** it comprises the following steps,

- receiving at least one first image from said image sensor;
- identifying at least one first region of interest in said first image, said at least one first region of interest corresponding to a part of said at least one first image;
- receiving at least one second image from said image sensor;
- identifying at least one second region of interest of said at least one second image, said at least one second region of interest corresponding to said at least one first region of interest of said at least one first image;
- comparing (440) said at least one first and second regions of interest and determining a mask of interest characterizing a variation of at least one feature of corresponding points in said at least one first and second regions of interest;

- determining (445) a movement of said at least one object from said mask of interest, said at least one object being at least partially represented in at least one of said at least one first and second regions of interest; and
- analyzing (470) said movement and, in response to said analyzing step, triggering or not triggering a predetermined action.

2. A method according to claim 1, wherein said step (445) of determining a movement comprises a step of determining and matching at least one pair of points of interest in said at least one first and second images, at least one point of said at least one pair of points of interest belonging to said mask of interest.

3. A method according to claim 2, wherein said step (445) of determining a movement comprises a step of determining and matching a plurality of pairs of points of interest in said at least one first and second images, at least one point of each of said pairs of points of interest belonging to said mask of interest, said movement being estimated on the basis of a transformation of a first set of points of interest into a second set of points of interest, the points of interest of said first and second sets belonging to said plurality of pairs of points of interest, the points of interest of said first set of points of interest furthermore belonging to said at least one first image and the points of interest of said second set of points of interest furthermore belonging to said at least one second image.

4. A method according to claim 3, wherein said transformation implements a weighting function based on a distance between two points of interest from the same pairs of points of interest of said plurality of pairs of points of interest.

5. A method according to claim 3 or claim4 further comprising a step of validating at least one point of interest of said at least one first image, belonging to said at least one pair of points of interest, according to said determined movement, said at least one validated point of interest being used to track said object in at least one third image following said at least one second image and said at least one validated point of interest being used for modifying a mask of interest created on the basis of said at least one second and third images.

6. A method according to anyone of the preceding claims wherein said step of comparing said at least one first and second regions of interest comprises a step of performing subtraction, point by point, of values of corresponding points of said at least one first and second regions of interest and a step of comparing a result of said subtraction to a predetermined threshold.

7. A method according to anyone of the preceding claims further comprising a step of detecting at least one predetermined feature in said at least one first image, said at least one first region of interest being at least partially identified in response to said detecting step.

8. A method according to claim 7, wherein said at least one predetermined feature is a predetermined shape and/or a predetermined color.

9. A method according to anyone of the preceding claims further comprising a step of estimating at least one modified second region of interest in said at least one second image, said at least one modified second region of interest of said at least one second image being estimated according to said at least one first region of interest of said at least one first image and of said at least one second region of interest of said at least one second image.

10. A method according to claim 9, wherein said estimation of said at least one modified second region of interest of said at least one second image implements an object tracking algorithm of KL T type.

11. A method according to anyone of the preceding claims wherein said movement is **characterized by** a translation, a rotation and/or a scale factor.

12. A method according to claims 1 to 10, wherein said movement is **characterized by** a scale factor, whether or not said predetermined action is triggered being determined on the basis of said scale factor.

13. A method according to anyone of the preceding claims wherein the movements of at least two objects situated in the field of said image sensor are determined, whether or not said predetermined action is triggered being determined according to a combination of the movements associated with said at least two objects.

14. A computer program comprising instructions adapted for the carrying out of each of the steps of the method according to anyone of the preceding claims when said program is executed on a computer.

15. A device comprising means adapted for the implementation of each of the steps of the method according to anyone of claims 1 to 13.

Fig.1a

Fig.1b

Fig.2a

Fig.2b

Fig.2c

Fig.2d

Fig.3

Fig.5

Image précédente ⌐ 405      400 ⌐ Image courante

410 ⌐ Initialisation

415 ⌐ Positionnement de la région d'intérêt

420 ⌐ Détection des pixels en mouvement par différence absolue

425 ⌐ Seuillage de la différence

460 ⌐ Modification du masque d'intérêt selon des points d'intérêt validés

Création d'un masque d'intérêt dans la région d'intérêt

430

435 ⌐ Détection de points d'intérêt dans le masque d'intérêt

440 ⌐ Suivi des points d'intérêts

445 ⌐ Estimation de degrés de libertés par mesure de similarité

Points d'intérêt validés

455

Elimination de mauvais points d'intérêt suivis

450

465 ⌐ Calcul de la nouvelle position de la région d'intérêt

470 ⌐ Calcul d'interactions avancées

Fig.4

## Fig.6a

## Fig.6b

Fig.6c

Fig. 7

## RÉFÉRENCES CITÉES DANS LA DESCRIPTION

**Documents brevets cités dans la description**

- FR 0753482
- FR 0752810
- FR 0902764
- FR 0752809
- FR 0957353
- FR 0854382

**Littérature non-brevet citée dans la description**

- **SINGH M et al.** Robust KLT tracking with gaussian and laplacian of guassian weighting functions. *IEEE Proceedings of the 17th international conference on pattern recognition,* 2004
- **BYOUNGCHUL KO et al.** A new content-based image retrieval system using hand gesture and relevance feedcack. *IEEE International conference on multimédia and expo,* 2001
- **CHEN-CHIUNG HSIEH et al.** Robust visual mouse by motion history image. *IEEE International conference on system science and engineering,* 2010
- Holographic and action capture techniques. **T. RODRIGUEZ ; A. CABO DE LEON ; B. UZZAN ; N. LIVET ; E. BOYER ; F. GEFFRAY ; T. BALOGH ; Z. MEGYESI ; A. BARSI.** Emerging Technologies. ACM SIGGRAPH, Août 2007
- **VIOLA ; JONES.** Rapid object detection using boosted cascade of simple features. *Computer Vision and Pattern Recognition,* 2001